# EUROPEAN PATENT SPECIFICATION

(11) **EP 2 256 007 B1**
(45) Date of publication and mention of the grant of the patent: **31.10.2012**
(21) Application number: 09161511.2
(22) Date of filing: 29.05.2009
(51) Int. Cl.: B60R 21/38

(54) **Safety release arrangement**
Sicherheitsauslösungsanordnung
Agencement à libération de sécurité

(43) Date of publication of application: 01.12.2010
(73) Proprietor: Autoliv Development AB, 447 83 Vårgårda (SE)
(72) Inventor: Haglund, Lennart, 447 32, Vårgårda (SE)
(74) Representative: Friberg, Ingvar

(56) References cited:
- EP-A- 1 659 037
- WO-A-2004/074051
- WO-A-2005/044645
- US-A1- 2009 078 487

## Description

### TECHNICAL FIELD

The invention relates to a safety release arrangement for disconnecting two parts in a vehicle in the case of an accident. The safety release arrangement may for example be used to disconnect an attachment in a hinge arrangement for a vehicle hood in order to provide an improved safety for pedestrians in case of an accident. The invention also relates to a method for mounting a safety release arrangement to a vehicle.

### BACKGROUND ART

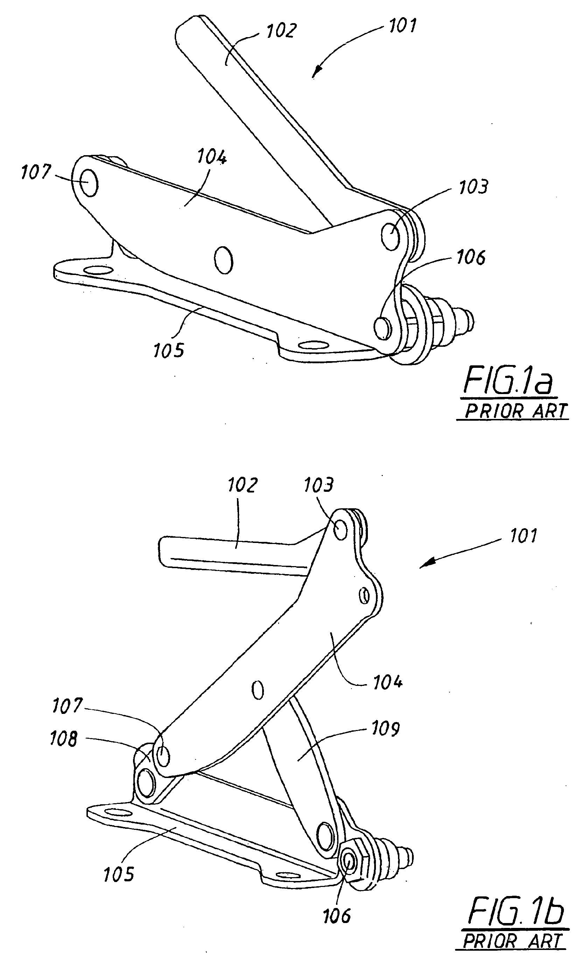

The use of releasable connections in vehicles has become more commonly occurring in vehicles as there has been an increased focus directed to safety aspects when developing vehicles. One kind of safety arrangements which may include releasable connections are those which are intended to break when they are subjected to a force and the connection will be released as a direct consequence of the force which the connection is subjected to. This may for example be the case for a multitude of crash energy absorption arrangements which by breakage or release of a connection allows a part of the vehicle to be deformed while absorbing energy and thus improving the chances for a passenger to avoid injuries. In addition to these kinds of arrangements where the release or safety arrangement is activated directly dependent on forces from an accident, there are also safety devices which are activated by an actuator when it is detected that a crash situation is occurring or likely to occur. These kinds of arrangements may include activation of a safety arrangement, such as inflation of an airbag, pre-stretching of a safety belt, lifting of a hood for pedestrian protection or withdrawing of a steering column. In some cases, it is sufficient to activate the desired safety arrangement while the activation itself will cause the relevant structures to break or to deform, e.g. a structure covering and holding an air bag may break from the forces associated with the activation of the air bag. In other cases, it may be desired to actively release an attachment or connection in order to allow the desired safety arrangement to function. This may for example be the case when a pedestrian safety hood lifter is used. In general, there is a need to release at least one connection associated with the hinge arrangement where the hood is connected to the chassis of a vehicle. Such an arrangement, according to the preamble of claim 1, is for example described in WO 2004 / 074051 wherein a locking spigot is adapted to disconnect an attachment between a lower hinge arm and a bracket. This arrangement is briefly described in association with figures 1a and 1b. In fig 1a is thus shown a hinge arrangement 101 comprising an upper hinge arm 102 which is rotationally connected by a pivotal connection 103 to a lower hinge arm 104. The lower hinge arm 104 is connected to a bracket 105 by a locking spigot 106 and a bolt 107, the bracket 105 intended to be attached to the chassis of a vehicle. In this configuration, the hinge arrangement 101 is in its first, normal mode during which a hood connected to the hinge arrangement may be opened and closed for servicing of the vehicle engine compartment.

In fig. 1b is the same hinge arrangement 101 shown when it is in its second, hood lifting mode used for protection of pedestrian colliding with the vehicle. In this mode, the connection between the lower hinge arm 104 and the bracket 105 by the locking spigot 106 is released. The release may for example be effectuated by the use of a pyrotechnic charge within the locking spigot 106 arrangement. The release will allow the end of the lower hinge arm 104 comprising the pivotal connection 103 to the upper hinge arm 102 to be elevated such that the rear end of a hood connected to the upper hinge arm 102 may be elevated. In this case, the lower hinge arm 104 is connected to the bracket 105 via intermediate brackets 108, 109 so as to provide a desired, controlled movement and positioning of the lower hinge arm 104 when the hood is lifted. The lifting of the lower hinge arm 104 may for example be performed by the use of a pneumatic spring (not shown) which either normally is compressed or activated at essentially the same time as the pyrotechnic charge.

Still another configuration of a safety hood lifter is disclosed in GB 2 400 827 which is briefly described in fig 2a and 2b. In fig 2a is thus shown a hinge arrangement 201 in its first, normal mode during which a hood 210 connected to the hinge arrangement 201 may be opened and closed for servicing of the vehicle engine compartment. The hinge arrangement 201 comprises an upper hinge arm 202 which is rotationally connected by a pivotal connection 203 to a lower hinge arm 204. The upper hinge arm 202 is connected to a bracket 205 which is attached to the hood 210 by a locking piston 206 and a bolt 207 while the lower hinge arm 204 is intended to be attached to the chassis of a vehicle. The piston bolt 206 forms part of a hood lifter 211 and is used for attaching the hood lifter to the bracket 205 and upper hinge arm 202.

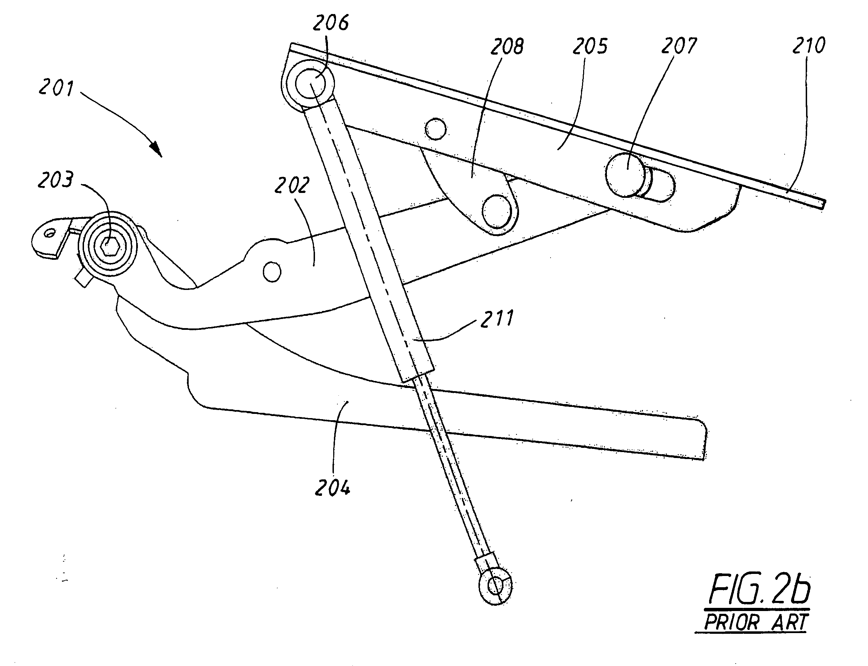

In fig. 2b is the hinge arrangement 201 shown when it is in its second, hood lifting mode used for protection of pedestrian colliding with the vehicle. In this mode, the connection between the upper hinge arm 202 and the bracket 205 by the locking piston 206 is released while maintaining the connection between the hood lifter 211 and the bracket 205. The release will allow the end of the bracket 205 closest to the pivotal connection 203 between the upper hinge arm 202 and lower hinge arm 204 to be elevated such that the rear end of the hood 210 may be elevated. In this case, the upper hinge arm 202 is also connected to the bracket 205 via an intermediate bracket 208 which in combination with the bolt 207 will provide a desired, controlled movement and positioning of the bracket 205 and the rear end of the hood 210 when the hood 210 is lifted by the hood lifter 211. In this case, the activation of the pedestrian safety hood lifting arrangement is caused by a single actuator which by the activation of a pyrotechnic device simultaneously provides the detachment of the locking piston 206 from the upper hinge arm 202 and the activation of the hood lifter 211.

Hence, there are known several safety arrangements for connecting two parts of a vehicle while they also are adapted to release the attachments when an actuator is activated. However, there may be certain demands concerning constructional features and mounting procedures requesting other kind of arrangements such that a reliable safety releasable arrangement may be provided which not may be achieved by the solutions described in the prior art.

### DISCLOSURE OF INVENTION

The invention relates to a safety release arrangement for a vehicle, a vehicle comprising such a safety release arrangement, a clamping device to be used in the safety release arrangement and a method for mounting of a safety release arrangement in a vehicle.

The safety release arrangement is intended to be used in a vehicle and comprises a first part and a second part intended to be parts of the vehicle. The safety release arrangement attaches the first part to the second part such that a first attachment at a first attachment point is formed. The attachment is adapted to connect the two parts in a first attachment mode during normal conditions and adapted to release the first attachment in a second release mode in a crash situation. Hence, the purpose of the first attachment is that it shall be able to be released in the case of an accident such that a safety improving device will be able to work, e.g. a hood lifting arrangement for protecting a pedestrian colliding with the vehicle, allowing an airbag to be activated and inflated or allowing a steering column to be withdrawn in order to prevent injuries of a driver. The safety release arrangement is further **characterised in that** it comprises a clamping arrangement attached to or connected to an attachment area of the first part or the second part at the first attachment at a first attachment point of the clamping device such that the clamping arrangement is engaged with the first attachment. The clamping device is further attached to an attachment area of the first or second part by a second attachment formed between a second attachment point of the clamping device and a second attachment point in said attachment area. The clamping arrangement also comprises an actuator adapted to be activated in the event of a crash situation and cause the part of the clamping arrangement comprising the first attachment point to move relatively said first part so as to disconnect the first attachment between said first part and said second part at the first attachment point. By attachment area in this context is meant an area, where the attachment points of the first or second vehicle part are located, to which the clamping device is attached.

The safety release arrangement may form part of a hinge arrangement for connecting a hood and a chassis of a vehicle or some other kind of hinge arrangement. In this case the hinge arrangement may comprise first bracket arrangement, corresponding to the first part of the vehicle, attached to a first anchoring plate, corresponding to the second part of the vehicle. In the case of a hood hinge, the anchoring plate is directly or indirectly attached to the hood or the chassis of the vehicle. The hinge arrangement also comprises a second bracket arrangement attached to a second anchoring plate which is attached to the vehicle part which the first anchoring plate is not attached to, i.e. the other one of the hood or the chassis of the vehicle. The first bracket arrangement and the second bracket arrangement are rotationally connected to each other by a pivotal connection such that a hinge between the hood and the chassis structure is created. The bracket arrangements are thus intended to form or be a part of the hinge arms of the hinge arrangement.

It would also be possible that first bracket arrangement, e.g. a first hinge arm, corresponds to the first vehicle part and the second bracket arrangement, e.g. a second hinge arm, corresponds to the second vehicle part, the first and second bracket arrangements being pivotally connected by the first releasable attachment.

The safety release arrangement may comprise the feature of providing said actuator with a piston. The piston is adapted to, when actuated, move in a direction towards a support area such that the part of the clamping arrangement comprising the first attachment point moves away from the attachment area due to the forces from the piston working on the support area. The movement of the first attachment point away from the attachment area may be achieved by allowing the complete clamping arrangement to move in this direction, by allowing the clamping arrangement to pivot around another attachment point or by allowing the clamping arrangement to bend at a weakened portion or allowing a complete detachment of the part of the clamping arrangement comprising the first attachment point. Hence, there are several ways of achieving the desired motion of the clamping arrangement such that at least a part of the clamping arrangement moves away from the attachment area, i.e. the attachment point. The movement may for example cause a locking pin or the like device, which is attached to the clamping arrangement at the first attachment point, to move with the clamping arrangement so as to withdraw the locking pin from its connecting position to a disconnecting position wherein the locking pin no longer forms a connection between the two vehicle parts.

The actuator may comprise a pyrotechnic device which upon activation causes the actuator to release the attachment between the first vehicle part, e.g. the first bracket arrangement, and the second vehicle part, e.g. the first anchoring plate. Hence the pyrotechnic device may activate a piston as disclosed above. It could also be possible that no piston is needed if the pyrotechnic device is adapted to explode with a controlled force and direction while the clamping device being attached so as to perform a controlled movement causing the relevant parts of the clamping arrangement to move a desired distance in a desired direction. Other kind of actuators may also be used, e.g. pneumatic or the like. However, many actuators of different kinds implies the use of more bulky and less convenient substructures and may not be as easy to mount as pyrotechnic devices even though they may operate satisfactorily.

The actuator may be connected to a control unit which activates the actuator in response to a control signal indicating a crash situation. It may also be possible that the actuator is manually operated even though this is considered less suitable in most cases since the release arrangement is intended for a crash situation.

The first attachment point of the clamping arrangement may be allowed to move relatively the attachment area due to bending or breakage of the clamping arrangement while the second attachment to the attachment area at the second attachment point is essentially unchanged. The second attachment may of course be slightly loosened due to the forces from the actuator but is essentially kept in the same state as before the activation. In this case it is possible to provide said clamping arrangement with a weakened section between the first attachment point and the second attachment point on the clamping arrangement such that bending or breakage of the clamping arrangement between the first and second attachment points is facilitated.

It is also possible that said first attachment point of the clamping arrangement is allowed to move relatively the attachment area due to a pivotal movement of the clamping arrangement at the second attachment point. In this case it is preferred that said clamping arrangement is adapted to facilitate a pivotal motion at the second attachment point, e.g. the part of the clamping device at the second attachment point which is in contact with the surface of the vehicle part may be rounded, there may be a distance between the clamping device and the vehicle part allowing a pivotal movement or the end portion of the clamping device closest to the first attachment point may be wedge shaped to allow the clamping device to pivot. It could also be possible that the attachment area where the clamping device is attached is adapted to allow a pivotal motion of the clamping arrangement.

In the case the first attachment comprises a locking pin inserted into a first hole in a first attachment point in the first vehicle part and a first hole in a first attachment point in the second vehicle part, said pin may be provided with locking means designed to prevent undesired detachment of the attachment during normal conditions. Hence, the locking means shall be strong enough to withstand forces which may occur unintentionally in order to release the locking pin from its locking position while the locking means shall be weak enough to allow a release of the pin from its locking position when the actuator is activated.

The locking pin may be provided with an attachment head portion adapted to be attached to the first attachment point in the clamping arrangement. As discussed above, the locking means keeping the locking pin in its engaging position are adapted to break or be released upon activation of said actuator, either as a direct result of the activation of the actuator or as consequence of the forces working on the locking pin from the movement of the clamping arrangement. Hence, the actuator will in this specific case cause the clamping arrangement at the location of the attachment point to move in a direction away from the attachment area such that the pin is withdrawn from at least one of the first hole in the first vehicle part or the first hole in the second vehicle part so as to release the attachment between the first and second vehicle part.

A clamping device, which for example may be used for such a safety release arrangement as described above, has a first side intended to be facing an attachment area of a first vehicle part, e.g. a bracket or the like, and being provided with a first attachment point and a second attachment point adapted to be attached to the attachment area or areas. The clamping arrangement further comprises an actuator provided with a piston which is adapted to be able to switch the function of the clamping device between a first attachment mode and a second detachment mode.

According to a version of the clamping device is the piston not protruding on the first side of the clamping arrangement when the configuration of the clamping arrangement is in its first attachment mode while the position of the piston will change when the actuator is activated such that the piston will protrude on the first side of the clamping arrangement when the mode of the clamping arrangement is changed to its second detachment mode. According to another version of the clamping device is the piston protruding a distance A on the first side of the clamping arrangement when the configuration of the clamping arrangement is in its first attachment mode while the position of the piston will change when the actuator is activated such that the piston will protrude a distance B on the first side of the clamping arrangement, distance B being longer than distance A, when the mode of the clamping arrangement is changed to its second detachment mode.

The clamping device may further be designed such that that said first and / or second attachment point of the clamping arrangement is made by an indentation in the clamping arrangement. By use of such an indentation it may for example be easy to retrofit the clamping arrangement to an existing pin or bolt mounted in a structure by fitting the pin or bolt into the indentation. The clamping arrangement may thus easily be used for retrofitting a releasable safety connection to a locking pin provided that the locking pin is adapted to be released from the force exerted from the clamping arrangement. In particular this feature may be useful in cases where it optionally shall be mounted a safety release arrangement. By using the same locking pin for both cases, e.g. for a first car provided with a safety arrangement using the locking pin respectively a second car not provided with the safety arrangement, it will not be necessary to provide a completely new attachment arrangement but only to modify the existing attachment arrangement by mounting a clamping device to the existing locking pin adapted to be released.

The piston of the clamping device may be designed to interact with a part of the clamping device such that the movement of the piston, when activated, is restricted to a certain distance. Further examples of design of the clamping device will be exemplified in the detailed description.

The above described safety release arrangement and clamping device could for example be used in the arrangements described in WO 2004/074051 or GB 2 400 827 and briefly referred to in figures 1 respectively 2.

The invention further relates to a method for mounting of a safety release arrangement in a vehicle. The method comprises the following steps:
a) attaching a first part of a vehicle to a second part of the vehicle such that a first attachment is made between a first attachment point in the first vehicle part and a first attachment point in the second vehicle part
b) attaching a clamping arrangement comprising an actuator for releasing the first attachment when activated, said clamping arrangement being attached to an attachment area of the first vehicle part or the second vehicle part, the attaching of the clamping arrangement comprising the step of attaching said clamping arrangement to the first attachment at a first attachment point and make a second attachment between a second attachment point of the clamping arrangement and a second attachment point of the first or second vehicle part
   wherein step a is performed before step b.

This method allows the actuating mechanism for the releasable connection to be mounted to the vehicle at a late stage which for example may be useful if the actuator comprises a sensitive element, e.g. a pyrotechnic charge, which not is desired to be mounted during certain working operations, e.g. painting.

The method step a may be further specified in that it may include that the first attachment is made by the insertion of a locking pin into a first hole in a first attachment point in the first vehicle part and a first hole in a first attachment point in the second vehicle part.

In this case, the locking pin may be provided with an attachment head.

The locking pin may also be provided with locking means designed to interact with parts of the attachment arrangement when mounted such that the locking means prevent undesired detachment of the first attachment during normal conditions and adapted to break or be released upon activation of said actuator. Hence, the locking pin is mounted so as to be prevented from unintentionally release. However, it could also be possible that this step (providing the releasable attachment with locking means) is performed in association with step b or after step b

The method step b may further include the feature of fitting in an indentation of the clamping arrangement into the locking pin by moving the clamping arrangement along the attachment area to a position where the locking pin and its attachment head forms an attachment between the clamping arrangement and the first attachment. The clamping arrangement is thereafter attached at a second attachment point of the clamping arrangement to a second attachment point in said attachment area.

### BRIEF DESCRIPTION OF DRAWINGS

- Fig. 1 a, b: Describes a first prior art hood lifting arrangement
- Fig. 2 a, b: Describes a second prior art hood lifting arrangement
- Fig. 3 a, b, c: Show different views of a clamping arrangement according to a first version (Fig. 8a, isometric view from above; Fig. 8b, isometric view from below; Fig. 8c side view)
- Fig. 4 a, b: Shows a longitudinal cross sectional view of a safety release arrangement comprising the clamping arrangement of fig. 3, the cross section taken along the longitudinal centre line when it is in its normal (inactivated) state (fig. 4a) and in its releasing (activated) state (Fig. 4b)
- Fig. 5: Shows a transversal cross sectional view of the safety release arrangement of fig. 4, the cross section taken through the releasable attachment (first attachment)
- Fig. 6: Shows a longitudinal cross sectional view of the first version ofthe clamping arrangement, the cross section taken along the longitudinal centre line
- Fig. 7 a, b, c: Show different views of a clamping arrangement according to a second version (Fig. 8a, isometric view from above; Fig. 8b, isometric view from below; Fig. 8c side view)
- Fig. 8 a, b: Shows a third version of the clamping arrangement when it is in its normal (inactivated) state (isometric view, fig. 8a) and in its releasing (activated) state (longitudinal cross sectional view fig. 8b)
- Fig. 9 a, b: Shows a fourth version of the clamping arrangement when it is in its normal (inactivated) state (isometric view, fig. 9a) and in its releasing (activated) state (longitudinal cross sectional view fig. 9b)
- Fig. 10: Shows a hinge arrangement for a vehicle hood provided with a safety release arrangement comprising a clamping arrangement
- Fig 11: Shows a clamping arrangement before it is mounted to a vehicle part to form a safety release arrangement

### EMBODIMENT(S) OF THE INVENTION

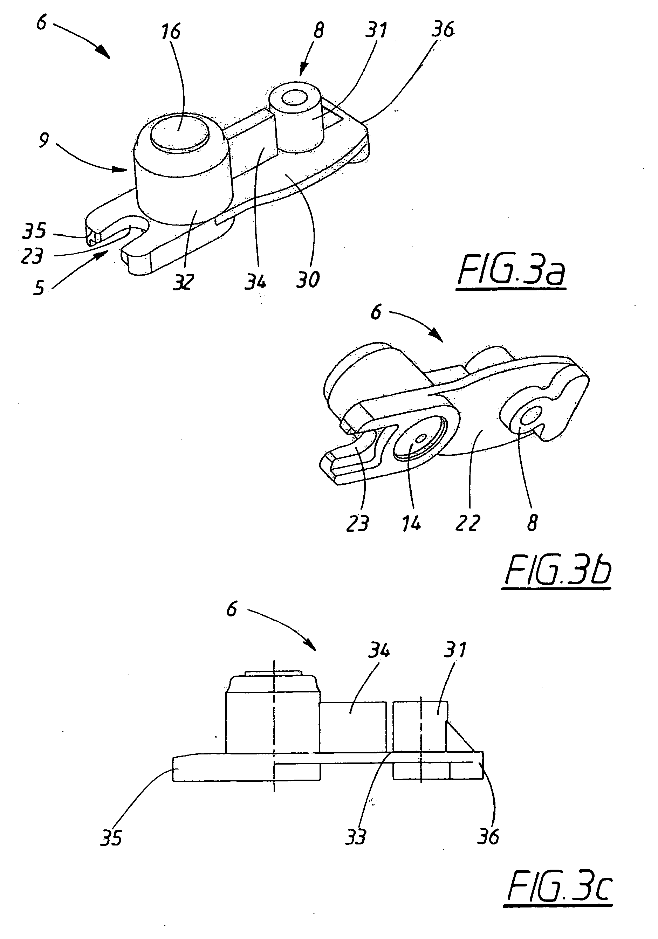

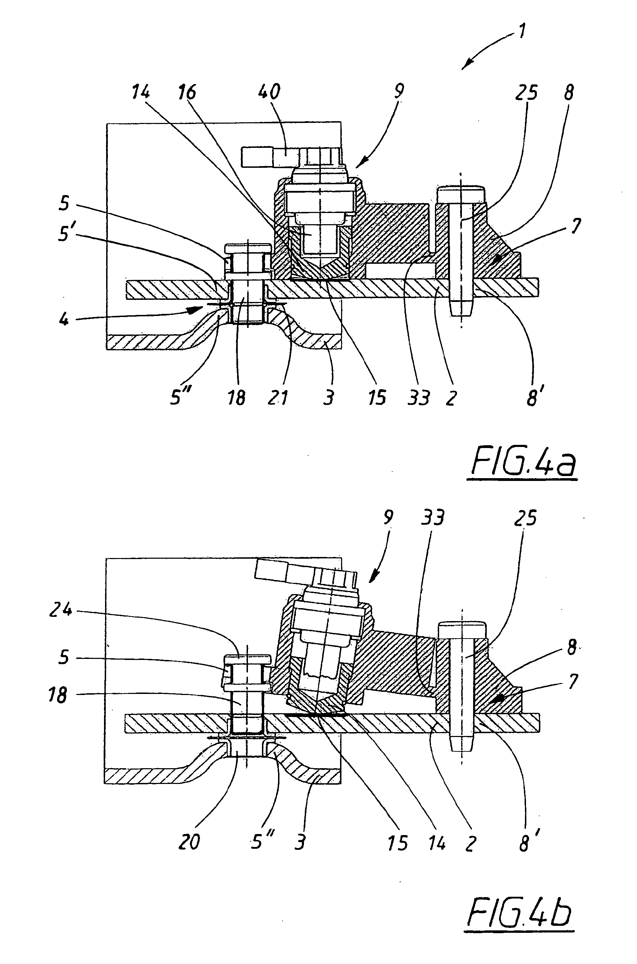

In fig. 3 is shown a clamping arrangement 6 according to the invention. The clamping device is intended to form part of a safety release arrangement for a vehicle. The clamping arrangement 6 comprises a first attachment point 5, in the form of an indentation 23 in a main portion 30 of the clamping device 6, and a second attachment point 8 in the form of a cylindrical anchoring device 31 located on said portion 30 and are intended to be used for attaching the clamping device 6 to a vehicle part. The main portion 30 is essentially in the form of an elongated plate and the attachment points 5, 8 are located near the respective longitudinal ends 35, 36. The clamping device further comprises an actuator 9, located in between the first and second attachment point 5, 8, and is provided with a piston 14 arranged inside a cylindrical shell 32. The piston 14 is arranged on the main portion 30 such that when it will be activated, e.g. by triggering a pyrotechnic device 16 located inside the cylindrical shell 32, the piston 14 will be forced to protrude from a first side 22 of the clamping device, in this case the underside of the main portion 30 of the clamping device 6 which is intended to be facing the vehicle part to which the clamping device 6 will be mounted. The main portion 30 further comprises a support wall 34 which is stretching in the centre part of the main portion 30 along its longitudinal axis. As can be best seen in figure 3c, the support wall does not stretch all the way from the actuator 9 to the cylindrical anchoring device 31 such that a weakened portion 33 in the form of a gap is formed in the clamping device. This design will facilitate and control a deformation (bending) of the main portion 30. If the clamping device is subjected to forces, e.g. due to activation of the actuator 9 such that the piston 14 will move so as to strive to protrude from the underside 22 of the clamping device 6, the main portion 30 will be bent provided that the clamping device 6 is sufficiently well anchored at the second attachment point 8, the first attachment 4 is sufficiently weak and that the piston 14 has a support area or anvil against which the piston may be supported to effectuate a force on the clamping arrangement 6 such that the portion of the clamping device 6 comprising the first attachment point 5 will be moved relatively an attachment area of the vehicle part. Hence, as will be shown more in detail in fig. 4, the clamping device 6 is designed so as to be bent when the actuator 9 is activated. The weakened portion 33 could of course be designed such that the clamping device 6 may be divided in two parts. However, by not allowing the clamping device 6 to be broken into two parts it is assured that the part of the clamping device 6 comprising the first attachment point 5 still will be attached to the vehicle part 2 and not may cause any harm. The weakened portion 33 may of course be achieved by a number of different arrangements. However, the present arrangement is an easy way of making a weakened portion while still controlling the degree of bending since the width of the gap between the wall 34 and the cylindrical anchoring portion 31 will control how much the main portion 30 will be allowed to bend. The weakened portion 33 may be further weakened than what is shown in figures 3 a - c by for example making the plate of the main portion 30 thinner at the weakened section, or providing the main portion with perforations or using another material in this part 33.

A suitable actuator which may be used for this version as well as for the other versions of the clamping arrangement described herein comprises a piston and a pressure source positioned inside a housing attached to the clamping arrangement. The housing is sealed to its environment by an O-ring forming a tight connection between the housing and the piston in order to avoid undesired matter, e.g. dirt, water or grease, entering into the housing. The actuator itself is considered to be a standard component and any suitable known actuator may be used.

The size of the clamping arrangement may vary but a clamping arrangement intended for use in a hinge arrangement for a vehicle hood may suitably about 5 - 10 cm in length, having a width of 2 - 4 cm and a height of 2 - 4 centimetres. The stroke length of the actuator may be in a range of 3 - 15 mm. In this case, the stroke length desired is normally between 5 - 10 mm in order to provide withdrawal of the locking pin. The actuator may be provided with a stop which interacts between the cylindrical shell of the actuator and the piston such that the stroke length is limited to a desired distance and eliminating the risk of the piston to be detached from the actuator. The force from the actuator needed to withdraw the locking pin depends on, in addition to the strength of the first attachment, the breaking or bending resistance at the weakened portion and the relative distances between the actuator, the first attachment and the weakened portion (or when the weakened portion is replaced by a rotatable second attachment as will be described later on, the distance to the second attachment).

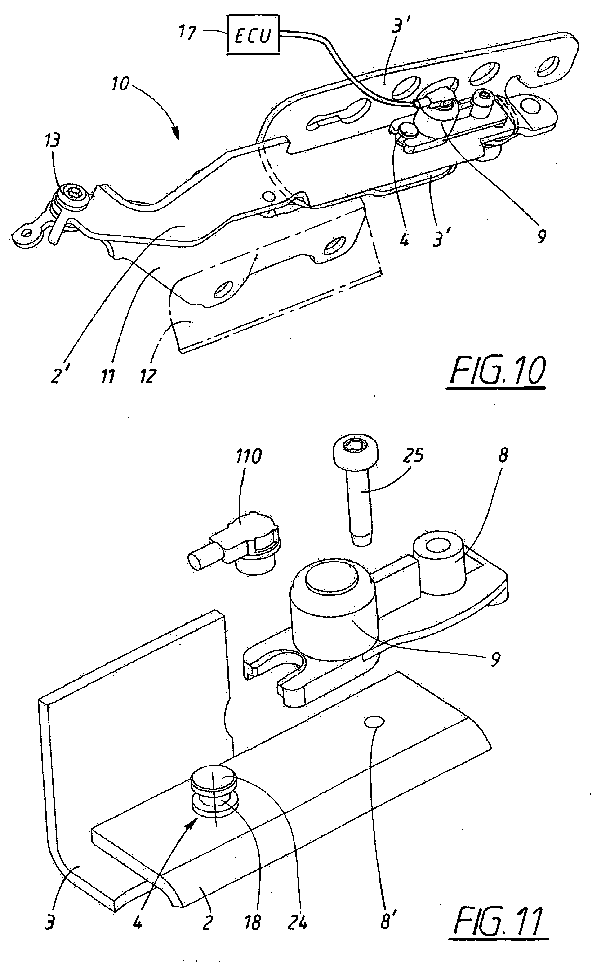

In fig. 4 is shown a longitudinal cross sectional view of a safety release arrangement 1 comprising a clamping arrangement 6 (see fig 3) when it is in its normal, attachment mode (see fig 4 a) when the first attachment 4 still is attaching the first vehicle part 2 to the second vehicle part 3 and when the safety release arrangement 1 is in its second, safety releasing mode (se fig. 4b) when the first attachment 4 no longer attaches the first vehicle part 2 to the second vehicle part 3. As may easily be noted in this representation of the safety release arrangement 1, a locking pin 18 forming the first attachment 4 in fig. 4 a is withdrawn in fig. 4b from a first hole 20 (see fig 4b) at a first attachment point 5" in the second vehicle part 3 such that the attachment 4 is released. The clamping device 6 is attached to the first vehicle part at a first attachment point 5 to the first attachment 4 and at a second attachment point 8 forming a second attachment 7 to an attachment 8' of the first vehicle part 2. The second attachment 7 is made by using a bolt 25. The withdrawal of the locking pin 18 occurs due to the activation of the actuator 9. When the actuator 9 is activated, a pyrotechnic charge 16 is exploding causing the piston 14 to move towards and press against a support area 15 of the first vehicle part 2 such that the clamping device will bend at a weakened portion 33. As a result, the part of the clamping device 6 comprising the first attachment point 5 will move away from the first vehicle part 2 and due to the engaging connection between the attachment head 24 of the locking pin 18 and the indentation 23 of the clamping device 6 at the first attachment point 5, the locking pin 18 will be withdrawn from its locking position forming the attachment 4. The force from the actuator 9 must be strong enough such that it can release the locking means 21 in order to withdraw the locking pin 18. The second attachment 7 remains intact. In figure 4 is also shown a wire 40 connected to the pyrotechnic device 16 at one end and at its other end connected to an electronical control unit 17 (see fig 10) in order to provide activation signals to the safety release arrangement in case of an accident.

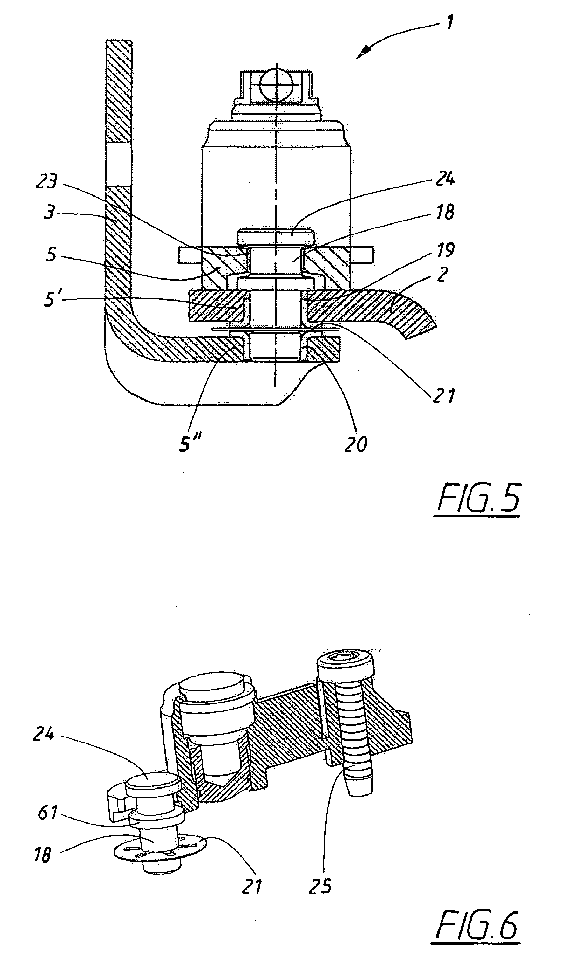

In fig. 5 is a cross sectional view, perpendicular to the longitudinal direction of the clamping device 6, shown wherein the cross sectional cut is made at the first attachment 4. In this view is the safety release arrangement 1 shown in its inactivated state when the locking pin 18 is located in its locking position penetrating through a first hole 19 in a first attachment point 5' of the first vehicle part 2 and a first hole 20 in a first attachment point 5" of the second vehicle part 3. In this view it is also more clearly shown how the attachment head 24 of the locking pin 18 engages with the indentation 23 of the clamping device 6 and thus will be withdrawn from the first hole 20 of the second vehicle part 3 when the actuator is activated. In addition, the locking means 21 comprising a washer ring is also shown in figure 5 as a thin lamella between the first 2 and second 3 vehicle parts. The washer ring shall be shaped and mounted to the first attachment 4 such that it may withstand normal forces which the attachment 4 may be subjected to without allow the attachment 4 to be released while not being to strong such that the locking not will be released when the actuator is activated.

Fig. 6 is probably the best figure to see the attachment auxiliaries which are used in this example of the invention. The attachment means used for making the second attachment 7 is exemplified as a threaded bolt 25. However, in the examples described above, when the second attachment is intended to essentially not move at all but be as rigid and secure as possible, any suitable method for attaching the second attachment point 8 of the clamping device 6 to the second attachment point 8' of the first vehicle part 2 may be used (see fig. 4). The locking pin 18 may in addition to the attachment head 24 also comprise a collar 61 such that the locking pin will fit well into the indentation 23 of the clamping device 6. In this view it is also easy to see an example of how a washer ring used to form the locking means 21 may be designed.

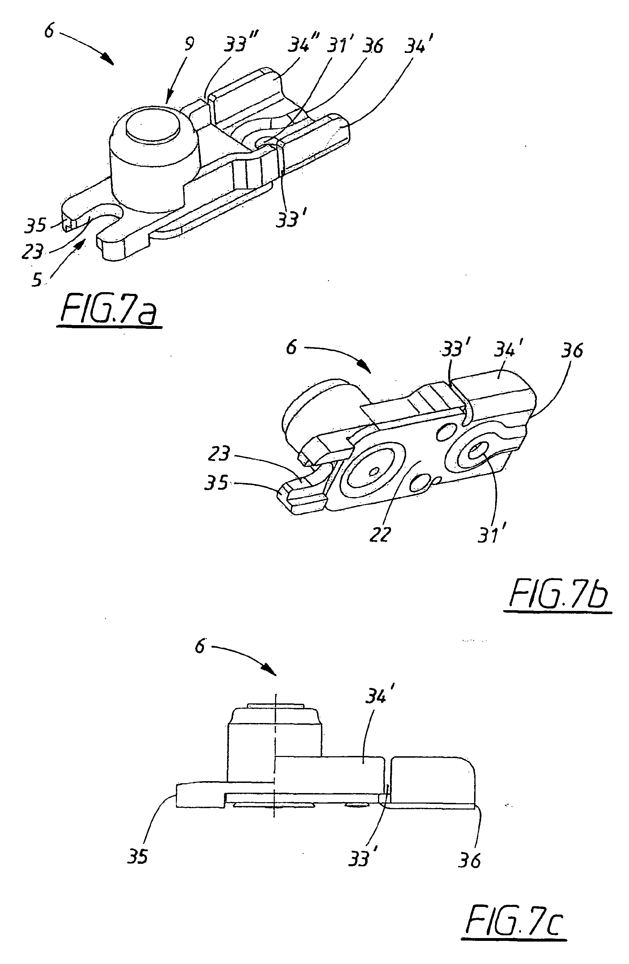

Fig 7 shows another embodiment similar to the one shown in fig. 3 using the same reference numbers unless otherwise indicated as in fig. 3. However, instead of one single central support wall as disclosed in fig. 3, this embodiment is provided with a first and second side walls 34', 34", each wall divided with a weakening portion 33' 33" and instead of a central cylindrical anchoring device as described in fig. 3, the second attachment point 8 comprises an ordinary hole 31' in the clamping device 6.

Both the device in fig. 3 and in fig. 7 are using the same principle of having a weakened portion in the clamping device 6 adapted to bend when the actuator 9 is activated having a slightly different design as pointed out above. In other aspects, the device shown in fig. 3 corresponds to the device in fig. 3 and the same reference numbers denotes the same features as in fig. 3.

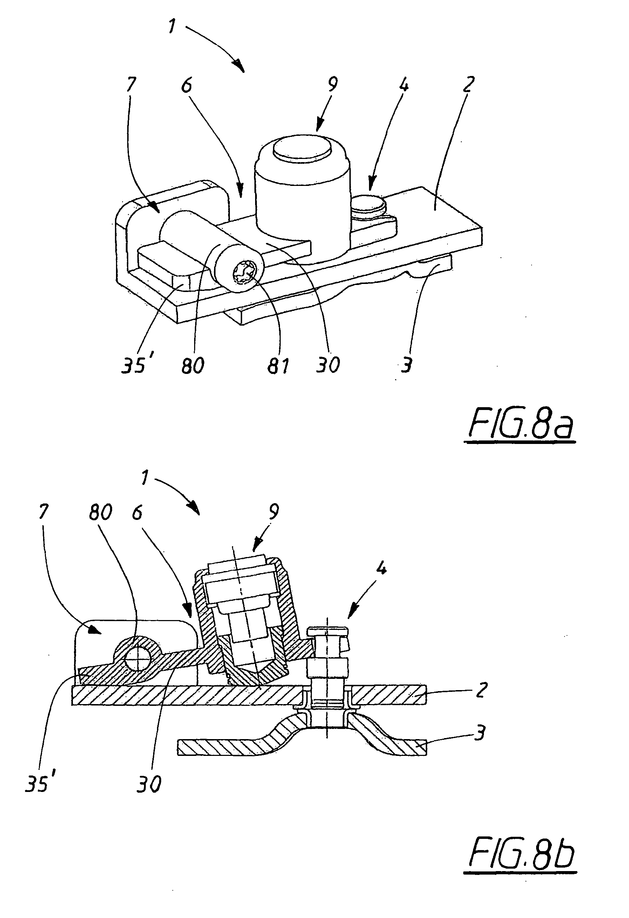

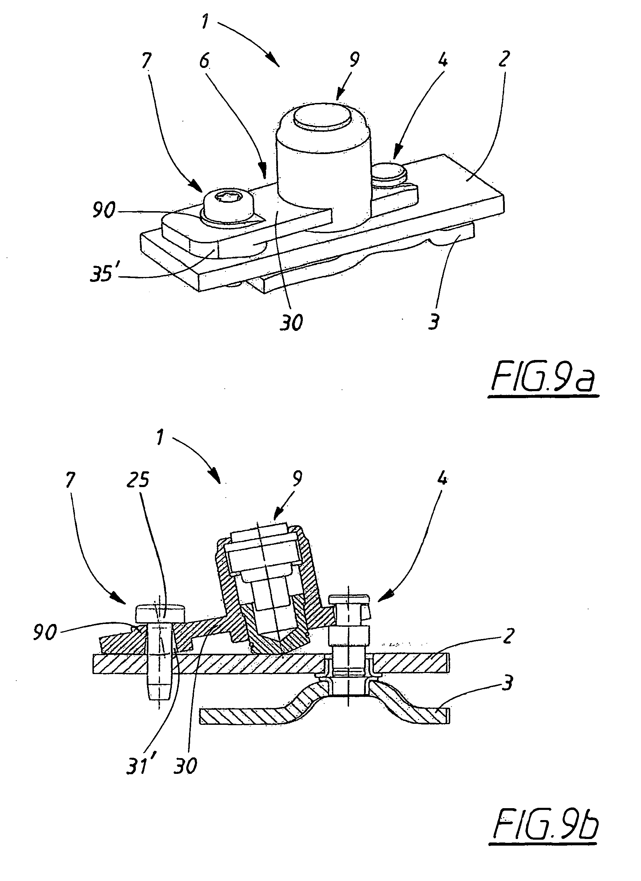

In fig 8 and 9 are shown two versions of a clamping device 6 which instead of having a weakened portion (see 33, 33' and 33" in fig 3 and 7) are designed to rotate or turn at the second attachment 7 when the actuator 9 is activated and the first attachment 4 between the first vehicle part 2 and the second vehicle part 3 is disconnected. The major difference between the design of the clamping arrangement 6 when compared to the versions described in figures 3 and 7 is that the weakening portion not longer is needed and the main portion 30 of the clamping device may be rigid. On the other hand, the end portion 35, which is closest to the second attachment 7 around which the clamping device is intended to turn, has been adapted to allow the clamping device to make a turning movement. As can be seen in both figures 8 and 9 is the underside 22 (see fig. 3b) at the first end portion cut off so as to form a wedge shape of the end portion 35'. Hence, this wedge shaped end portion 35' will allow the clamping device 6 in figures 8 and 9 to turn. However, it is obvious that the same effect would have been achieved if there would have been a cut out in the vehicle part 2 such that a turning motion could have been allowed or by any other suitable means for making an arrangement allowing a turning motion.

The arrangement for making a turning movement in fig. 8 comprises a hollow cylindrical element 80 forming a part of the clamping arrangement 6 and attached to the first vehicle part 2 by a bolt 81 such that an axis of rotation is made. In fig 8a, the safety arrangement 1 is in its inactivated state while the first attachment between the first and second vehicle part 2, 3 is connecting the vehicle parts 2, 3. In figure 8b is the safety arrangement 1 shown in its detachment state when the actuator 9 has been activated and the first and second vehicle parts 2, 3 are detached from each other at the first attachment 4 while the clamping arrangement 6 has turned at its second attachment 7.

The arrangement in fig. 9 is also constructed to allow a turning motion of the clamping device 6 at the second attachment 7. In this case is the second attachment 7 of the clamping arrangement 6 formed by a bolt 25 attached through a hole in the main portion 30 of the clamping arrangement. In order to allow a turning motion to occur is the hole 31' cone shaped such that the lower part of the hole 31' is larger (the base portion of the cone) allowing the clamping arrangement to make a rotational movement at the second attachment 7. In addition is the upper side of the clamping arrangement, i.e. the side facing away from the first vehicle part 2, at the attachment point 8, provided with a partly wedge shaped surface 90 arranged so as to allow a rotational movement of the clamping device 6. As can be seen in figure 9a is the head of the bolt 25 in contact with the part planar part of the surface 90 closest to the end portion 35' before the actuator is activated. Then, when the actuator has been activated as shown in figure 9b, the bolt will be in contact with the wedge-shaped part of the surface 90. By adapting the angle between the planar surface and the wedge-shaped part it will be possible to allow a certain rotational movement of the clamping device 6 without rupturing the attachment 7.

Instead of using a wedge shaped end portion 35' as described in figures 8 and 9, it is possible to have other arrangements, e.g. a bulge shaped part at the attachment point 8 on the underside 22 of the clamping arrangement 6. Hence, the specific design of this part of the clamping arrangement is not essential as long as the clamping arrangement 6, the attachment 7 and the vehicle part 2, 2', 3, 3' to which the attachment 7 is made are adapted to allow the clamping arrangement to perform a turning motion when the actuator is activated in those cases the clamping arrangement is intended to rotate at the second attachment 7. Hence, the arrangements in fig 8 and 9 only exemplify two of a multitude of possible solutions and there are numerous ways for the skilled person in the art to provide solutions for making an attachment allowed to rotate and these versions only serves as a few examples of how such a rotational attachment may be made.

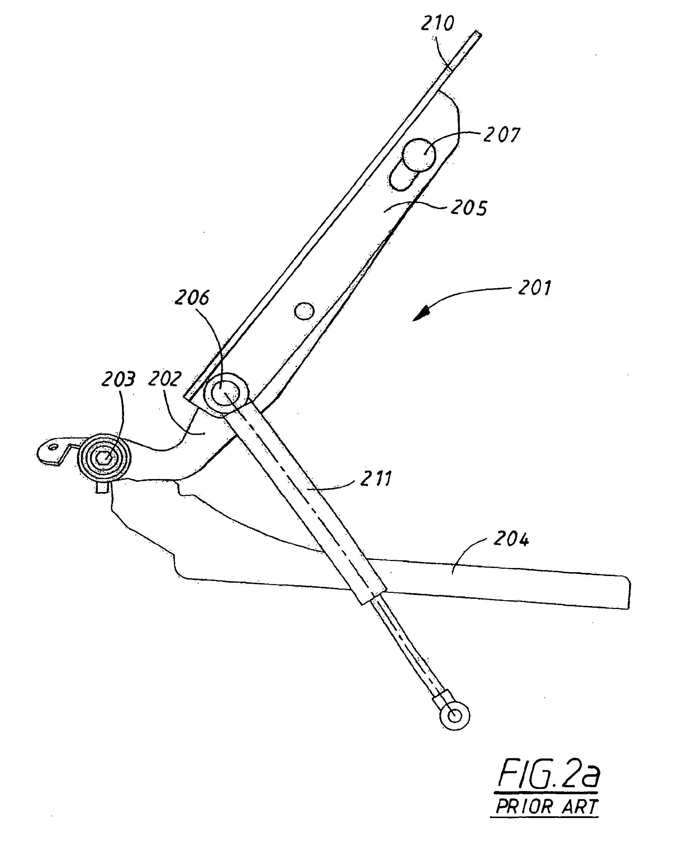

The clamping device as described in figures 3-9 are suitable to form part of the prior art safety release arrangements shown in figures 1 and 2 and briefly described in the text. In the arrangement shown in figure 1 the present arrangement simply replaces the releasable connection. In the arrangement in figure 2, in which the releasable arrangement is a part of the hood lifting device, the hood lifting device may be substituted for an ordinary hood lifting device while the present arrangement either is mounted on the hood lifting device, mounted on the opposite side of the hood lifting device or rearrange the arrangement such that the hood lifting device only is connected to the bracket of the hood and not to the hinge arm while the present release arrangement may be located beside the hood lifting arrangement and forming a separate releasable connection between the hood bracket and the hinge arm.

In figure 10 is shown a hinge arrangement 10 reminding of the hinge arrangement in figure 1. The hinge arrangement is provided with a clamping arrangement 6 so as to provide a releasable safety arrangement. The clamping arrangement is attached to a first bracket arrangement 2', corresponding to the first vehicle part 2, which forms part of the hinge arrangement 10. The first attachment 4 connects the first bracket arrangement 2' to a first anchoring plate 3', corresponding to the second vehicle part 3. The anchoring plate 3' is intended to be attached to or form part of a hood. To be noted, the anchoring plate 3' is bent essentially 90 degrees and is located behind the first bracket arrangement 2'. The first bracket arrangement 2' is rotatably connected at a pivotal connection 13 to a second bracket arrangement 11 such that the first bracket arrangement 2' forms an upper hinge arm and the second bracket 11 arrangement forms a lower hinge arm of the hinge arrangement 10. The second bracket arrangement 11 is attached to a second anchoring plate 12 which is intended to be attached to or form part of a chassis structure. The actuator 9 is connected to an Electronic Control Unit (ECU) 17 which is adapted to send a control signal when there is a desire to activate the actuator 9. The ECU 17 may in turn be connected to a variety of sensors relevant for sensing and detecting parameters which may be used to decide if there is a collision occurring or there will be collision when the safety release arrangement shall be activated.

Figure 11 shows the safety release arrangement before it has been completely assembled. At this stage has a first vehicle part 2 been attached to a second vehicle part 3 such that a first attachment 4, connecting the first and second vehicle part 2, 3, has been made. This step is performed first according to the specific mounting procedure described herein. The first attachment 4 may for example be one as previously described in association with figures 4, 5 and 10. Hence, with reference to figures 4 and 5, the first attachment 4 may be made by inserting a locking pin 18 into a first hole 19 in a first attachment point 5' in the first vehicle part 2 and a first hole 20 in a first attachment point 5" in the second vehicle part 3. The locking pin may be provided with an attachment head 24. The locking pin 18 may further be provided with locking means 21, e.g. a washer ring as described in figure 5, designed to prevent undesired detachment of the first attachment 4 during normal conditions and adapted to break or be released upon activation of said actuator 9. To be noted, there may be other solution than providing the locking pin 18 with an attachment head in order to provide means for attaching the locking pin 18 to the clamping arrangement.

In a second step, following the first step, is the clamping arrangement 6 with the actuator 9, for releasing the first attachment 4 when activated, attached to the first attachment 4 at a first attachment point 5 and a second attachment 7 between a second attachment point 8 of the clamping arrangement 6 and a second attachment point 8' in one of the first or second vehicle parts 2, 2', 3 or 3. As the clamping device 6 is constructed, it is suitable that the indentation 23 of the clamping arrangement 6 is fitted in with the locking pin 18 by moving the clamping arrangement along the vehicle part 2, 2', 3 or 3' to which the clamping arrangement 6 shall be attached by the first attachment 4. In case the locking pin is provided with an attachment head 24 and the clamping device is provided with an indentation 23, the clamping arrangement is moved to a position where the locking pin 18 and, its attachment head 24 forms an attachment between the clamping arrangement 6 and the indentation of the clamping arrangement 6 to form an engaging connection at the first attachment 4. Thereafter may the clamping arrangement 6 be attached by for example a bolt 25 at a second attachment point 8 to a second attachment point 8' by a bolt 25 of said vehicle parts 2, 2', 3 or 3' and the actuator 9 be connected to connector 110 in order to receive activation signals.

The main reason for this mounting method is that it may be desirable to not mount the clamping device, comprising an actuator which may include a pyrotechnic device, to a vehicle until certain operations has been performed, e.g. painting of the vehicle. A second benefit is that the same basic mounting procedure, i.e. the first step of the mounting procedure, may be used regardless if the vehicle shall contain an active releasable connection or not since the connection may be mounted in any case and in those cases a releasable connection is desired, it is only to mount the clamping device and, if necessary, connect the actuator to an activating device, e.g. an ECU.

It is obvious to the skilled person in the art that there may be many modifications which are within the scope of the invention. For instance, the specific mounting details may be different as well as the design of the clamping device and the actuator. The aim of these embodiments is to show examples of devices which are easy to manufacture and to mount even though it would be easy to modify these arrangements to include more sophisticated details. The use of the fork-shaped indentation or similar arrangement is not necessary if it is not desired that the clamping device shall be possible to mount after the locking pin, if the locking pin and clamping device are intended to be mounted at the same time, it may be an ordinary hole or any kind of attachment which may be easily made.

In the embodiments described herein is the actuator located between the first and second attachment points of the clamping device. However, it is obvious for the skilled person that the actuator also may be located between the end portion close to the first attachment point and the first attachment point. The actuator itself may be any kind of actuator which is able to upon activation provide a force sufficient to disconnect the first attachment. the material choice of the clamping device is not essential but a number of suitable material such as aluminium, zinc, steel or metal alloys may be used and plastic material may also be used for certain applications. However, depending on the use the skilled person will be able to find a suitable material. The clamping arrangement may either be casted or moulded, e.g. a casted zinc or aluminium clamp. It is also evident that different material may be used for different parts of the clamping arrangement, e.g. may moulded aluminium parts forming the clamping arrangement be provided with a connecting metal be provided with a plate of steel forming a bridge between the parts while the steel plate forms the weakened portion intended to be bent. The clamping arrangement may also be made by cutting, bending and embossing of sheet metal. Hence, there are many different materials and methods which may be used in order to manufacture the clamping device.

Likewise, the indentation 23 is shown to be at an end portion of the clamping arrangement 6. However, it is obvious that in case an indentation is desired as an attachment point it is possible to shape another part of the clamping arrangement such that it comprises an indentation, e.g. at a log side of a clamping arrangement or having an additional structure provided with the indentation.

## Claims

1. A safety release arrangement (1) for a vehicle comprising a first vehicle part (2) and a second vehicle part (3), said safety release arrangement (1) attaching the first part (2) to the second part (3) by a first attachment (4) at first attachment points (5', 5") of the first respectively second parts (2, 3) in a first attachment mode during normal conditions and adapted to release the first attachment (4) in a second release mode in a crash situation
**characterized in that**
said safety release arrangement (1) comprises a clamping arrangement (6) provided with a first attachment point (5) attached to the first part (2) or the second part (3) by said first attachment (4) at one of said first attachment point (5', 5") of the first or second part (2, 3) and a second attachment (7) between a second attachment point (8) of the clamping arrangement (6) and a second attachment point (8') of the first or second part (2, 3), said clamping arrangement (6) further comprising an actuator (9) adapted to be activated in the event of a crash situation and cause the part of the clamping arrangement (6) comprising the first attachment point (5) to move relatively said first part (2) or second part (3) so as to disconnect the first attachment (4) between said first part (2) and said second part (3) at the first attachment points (5', 5") of said first part (2) and said second part (3).

2. A safety release arrangement (1) according to claim 1
**characterized in that**
said safety release arrangement forms part of a hinge arrangement (10) for connecting a hood and a chassis of a vehicle, said hinge arrangement (10) comprising a first bracket arrangement (2'), corresponding to the first part (2) of the vehicle, attached to a first anchoring plate(3'), corresponding to the second part (3) of the vehicle, of the hood or the chassis of the vehicle, said hinge arrangement (10) further comprising a second bracket arrangement (11) attached to a second anchoring plate (12) of the other one of the hood (2) or the chassis (3) of the vehicle, said first bracket arrangement (2') and said second bracket arrangement (11) rotationally connected to each other by a pivotal connection (13).

3. A safety release arrangement (1) according to any previous claim **characterized in that** said actuator (9) comprises a piston (14) adapted to, when activated, move in a direction towards a support area (15) of the vehicle part (2,2',3 or 3') to which the clamping arrangement (6) is attached by the first attachment (4) such that the part of the clamping arrangement (6) comprising the first attachment point (5) moves away from the vehicle part (2,2',3 or 3') to which it is attached due to the forces from the piston (14) working on the support area (15).

4. A safety release arrangement (1) according to any previous claim **characterized in that** said actuator (9) comprises a pyrotechnic device (16) which upon activation causes the actuator (9) to release the attachment between the first vehicle part (2, 2') and the second vehicle part (3, 3').

5. A safety release arrangement (1) according to any previous claim **characterized in that** said actuator (9) is connected to a control unit (17) which activates the actuator in response to a control signal indicating a crash situation.

6. A safety release arrangement (1) according to any previous claim **characterized in that** said first attachment point (5) of the clamping arrangement (6) is allowed to move relatively the vehicle part (2,2',3 or 3') to which the clamping arrangement (6) is attached by the first attachment (4) due to bending or breakage of the clamping arrangement (6) while the second attachment (7) between the vehicle part (2,2',3 or 3') and the clamping arrangement (6) still is maintained.

7. A safety release arrangement (1) according to claim 6 **characterized in that** said clamping arrangement (6) is provided with a weakened section (33) between the first attachment point (5) and the second attachment point (8) such that bending or breakage of the clamping arrangement (6) between the first (5) and second (8) attachment points of the clamping arrangement (6) is facilitated.

8. A safety release arrangement (1) according to anyone of claims 1-5 **characterized in that** said first attachment point (5) of the clamping arrangement (6) is allowed to move relatively the vehicle part (2,2',3 or 3') to which the clamping arrangement (6) is attached by the first attachment (4) due to a pivotal movement of the clamping arrangement (6) at the second attachment point (8') to the vehicle part (2,2',3 or 3').

9. A safety release arrangement (1) according to claim 8 **characterized in that** said clamping arrangement (6) is adapted to facilitate a pivotal motion at the second attachment point (8').

10. A safety release arrangement (1) according to any previous claim **characterized in that** said first attachment (4) comprises a locking pin (18) inserted into a first hole (19) in a first attachment point (5') in the first vehicle part (2, 2') and a first hole (20) in a first attachment point (5") in the second vehicle part (3, 3'), said pin (18) provided with locking means (21) designed to prevent undesired detachment of the first attachment (4) during normal conditions, said pin (18) provided with an attachment head portion (24) adapted to be attached to the first attachment point (5) in the clamping arrangement (6), said locking means (21) adapted to break or be released upon activation of said actuator (9) while said actuator also causes the clamping arrangement (6) at the location of the first attachment point (5) to move in a direction away from the vehicle part (2,2',3 or 3') to which the clamping arrangement (6) is attached by the first attachment (4) such that the pin (18) is withdrawn from at least one of the first hole (20) in the first vehicle part (2, 2') and the first hole (21) in the second vehicle part (3, 3') so as to release the first attachment (4) between the first (2, 2') and second (3, 3') vehicle part.

11. A clamping arrangement (6) for a safety release arrangement (1) for a vehicle safety device, said clamping arrangement (6) having a first side (22) intended to be facing the vehicle part (2,2',3 or 3') to which the clamping arrangement (6) is attached by the first attachment (4), said clamping arrangement (6) further provided with a first attachment point (5) and a second attachment point (8) adapted to be attached to an vehicle part (2,2',3 or 3'), the clamping arrangement (6) further comprising an actuator (9) provided with a piston (14) adapted to be able to switch between a first attachment mode wherein the piston (14) is not protruding or protruding a distance a on the first side (22) of the clamping arrangement (6) and a second detachment mode wherein the piston (14) is protruding a distance b, distance b being longer than distance a, on the first side (22) of the clamping arrangement (6).

12. A clamping arrangement (6) according to claim 11 **characterized in that** said first (5) or second (8) attachment point of the clamping arrangement (6) is made by an indentation (23) in the clamping arrangement (6).

13. A clamping arrangement (6) according to claim 11 **characterized in that** said piston (14) is constructed so as to interact with a part of the clamping arrangement (6) such that the movement of the piston (15), when activated, is restricted to a limited distance.

14. A method for mounting of a safety release arrangement (1) in a vehicle (4) comprising the steps of:
a) attaching a first vehicle part (2, 2') to a second part (3, 3') such that a first attachment (4) is made between a first attachment point (5') in the first vehicle part (2) and a first attachment point (5") in the second vehicle part (3)
b) attaching a clamping arrangement (6) comprising an actuator (9) for releasing the first attachment (4) when activated, the attaching of the clamping arrangement comprising the step of attaching said clamping arrangement (6) to the first attachment (4) at a first attachment point (5) and make a second attachment (7) between a second attachment point (8) of the clamping arrangement (6) and a second attachment point (5', 5") in one of the first or second vehicle parts (2, 2', 3 or 3')
wherein step a is performed before step b.

15. A method according to claim 14 wherein the method step a further comprises:
- the insertion of a locking pin (18), provided with an attachment head (24), into a first hole (19) in a first attachment point (5') in the first vehicle part (2) and a first hole (20) in a first attachment point (5") in the second vehicle part(3) so as to form the first attachment (4) and providing said pin (18) with locking means (21) designed to prevent undesired detachment of the first attachment (4) during normal conditions and adapted to break or be released upon activation of said actuator (9), and said step b further comprising:
- fitting in an indentation (23) of the clamping arrangement (6) into the locking pin (18) by moving the clamping arrangement along the vehicle part (2,2'.3 or 3') to which the clamping arrangement (6) shall be attached by the first attachment (4) to a position where the locking pin (18) and its attachment head (24) forms an attachment between the clamping arrangement (6) and the first attachment (4), thereafter attaching the clamping arrangement (6), at a second attachment point (8), to a second attachment point (8') of said vehicle parts (2,2',3 or 3').

## Patentansprüche

1. Sicherheitsauslösevorrichtung (1) für ein Fahrzeug umfassend ein erstes Fahrzeugteil (2) und ein zweites Fahrzeugeil (3), welche Sicherheitsauslösevorrichtung (1) durch eine erste Befestigung (4) an ersten Befestigungspunkten (5' 5") des ersten bzw. zweiten Teils (2, 3) in einer ersten Befestigungsart unter normalen Bedingungen das erste Teil (2) an dem zweiten Teil (3) befestigt und dazu ausgebildet ist, bei einer Crashsituation die erste Befestigung (4) in einer zweiten Auslöseart zu lösen,
**dadurch gekennzeichnet, dass**
die Sicherheitsauslösevorrichtung (1) eine Spannvorrichtung (6) umfasst, welche mit einem ersten Befestigungspunkt (5) versehen ist, der durch die erste Befestigung (4) an einem der ersten Befestigungspunkte (5', 5") des ersten oder des zweiten Teils (2, 3) an dem ersten Teil (2) oder dem zweiten Teil (3) befestigt ist, und mit einer zweiten Befestigung (7) zwischen einem zweiten Befestigungspunkt (8) der Spannvorrichtung (6) und einem zweiten Befestigungspunkt (8') des ersten oder des zweiten Teils (2, 3) versehen ist, wobei die Spannvorrichtung (6) ferner einen Stellglied (9) umfasst, welcher dazu ausgebildet ist, im Falle einer Crashsituation aktiviert zu werden und zu bewirken, dass der den ersten Befestigungspunkt (5) umfassende Teil der Spannvorrichtung (6) das erste Teil (2) oder das zweite Teil (3) relativ bewegt, um die erste Befestigung (4) zwischen dem ersten Teil (2) und dem zweiten Teil (3) an den ersten Befestigungspunkten (5', 5") des ersten Teils (2) und des zweiten Teils (3) zu lösen.

2. Sicherheitsauslösevorrichtung (1) nach Anspruch 1,
**dadurch gekennzeichnet, dass**
die Sicherheitsauslösevorrichtung Teil einer Scharniervorrichtung (10) zum Verbinden einer Motorhaube und eines Fahrgestells eines Fahrzeugs bildet, welche Scharniervorrichtung (10) eine erste Beschlagvorrichtung (2'), entsprechend dem ersten Teil (2) des Fahrzeugs, umfasst, welche an einer ersten Verankerungsplatte (3'), entsprechend dem zweiten Teil (3) des Fahrzeugs, der Motorhaube oder des Fahrgestells des Fahrzeugs befestigt ist, welche Scharniervorrichtung (10) ferner eine zweite Beschlagvorrichtung (11) umfasst, welche an einer zweiten Verankerungsplatte (12) des anderen der Motorhaube (2) oder des Fahrgestells (3) des Fahrzeugs befestigt ist, wobei die erste Beschlagvorrichtung (2') und die zweite Beschlagvorrichtung (11) durch eine Drehverbindung (13) miteinander drehbar verbunden sind.

3. Sicherheitsauslösevorrichtung (1) nach einem der vorgehenden Ansprüche, **dadurch gekennzeichnet, dass** der Stellglied (9) einen Kolben (14) umfasst, welcher beim Aktivieren dazu ausgebildet ist, sich in eine Richtung eines Stützbereiches (15) des Fahrzeugteils (2, 2', 3 oder 3') zu bewegen, an welchem die Spannvorrichtung (6) durch die erste Befestigung (4) derart befestigt ist, dass sich der den ersten Befestigungspunkt (5) umfassende Teil der Spannvorrichtung (6) von dem Fahrzeugteil (2, 2', 3 oder 3') weg bewegt, an welchem er durch die Kräfte des auf dem Stützbereich (15) arbeitenden Kolbens (14) befestigt ist.

4. Sicherheitsauslösevorrichtung (1) nach einem der vorgehenden Ansprüche, **dadurch gekennzeichnet, dass** der Stellglied (9) eine pyrotechnische Anordnung (16) umfasst, welche beim Aktivieren den Stellglied (9) dazu bewegt, die Befestigung zwischen dem ersten Fahrzeugteil (2, 2') und dem zweiten Fahrzeugteil (3, 3') zu lösen.

5. Sicherheitsauslösevorrichtung (1) nach einem der vorgehenden Ansprüche, **dadurch gekennzeichnet, dass** der Stellglied (9) mit einer Steuereinheit (17) verbunden ist, welche als Antwort auf ein eine Crashsituation anzeigendes Kontrollsignal den Stellglied aktiviert.

6. Sicherheitsauslösevorrichtung (1) nach einem der vorgehenden Ansprüche, **dadurch gekennzeichnet, dass** der erste Befestigungspunkt (5) der Spannvorrichtung (6) erlaubt wird, das Fahrzeugteil (2, 2', 3 oder 3'), an welchem die Spannvorrichtung (6) durch die erste Befestigung (4) befestigt ist, infolge eines Biegens oder eines Bruchs der Spannvorrichtung (6) relativ zu bewegen, während die zweite Befestigung (7) zwischen dem Fahrzeugteil (2, 2', 3 oder 3') und der Spannvorrichtung (6) immer noch aufrechterhalten wird.

7. Sicherheitsauslösevorrichtung (1) nach Anspruch 6, **dadurch gekennzeichnet, dass** die Spannvorrichtung (6) mit einem abgeschwächten Abschnitt (33) zwischen dem ersten Befestigungspunkt (5) und dem zweiten Befestigungspunkt (8) ausgestattet ist, so dass ein Biegen oder ein Bruch der Spannvorrichtung (6) zwischen dem ersten (5) und dem zweiten (8) Befestigungspunkt der Spannvorrichtung (6) erleichtert wird.

8. Sicherheitsauslösevorrichtung (1) nach einem der Ansprüche 1 bis 5, **dadurch gekennzeichnet, dass** der erste Befestigungspunkt (5) der Spannvorrichtung (6) erlaubt wird, das Fahrzeugteil (2, 2', 3 oder 3'), an welchem die Spannvorrichtung (6) durch die erste Befestigung (4) befestigt ist, infolge einer Drehbewegung der Spannvorrichtung (6) an dem zweiten Befestigungspunkt (8') gegen das Fahrzeugteil (2, 2`, 3 oder 3') relativ zu bewegen.

9. Sicherheitsauslösevorrichtung (1) nach Anspruch 8, **dadurch gekennzeichnet, dass** die Spannvorrichtung (6) dazu ausgebildet ist, eine Drehbewegung an dem zweiten Befestigungspunkt (8') zu erleichtern.

10. Sicherheitsauslösevorrichtung (1) nach einem der vorgehenden Ansprüche, **dadurch gekennzeichnet, dass** die erste Befestigung (4) einen Verriegelungsstift (18) umfasst, welcher in einem ersten Loch (19) in einem ersten Befestigungspunkt (5') in dem ersten Fahrzeugteil (2, 2') und in einem ersten Loch (20) in einem ersten Befestigungspunkt (5") in dem zweiten Fahrzeugteil (3, 3') eingesetzt ist, welcher Stift (18) mit Verriegelungsmitteln (21) versehen ist, welche dazu ausgestaltet sind, ein unerwünschtes Lösen der ersten Befestigung (4) unter normalen Bedingungen zu verhindern, welcher Stift (18) mit einem Befestigungskopfabschnitt (24) versehen ist, welcher dazu ausgebildet ist, an dem ersten Befestigungspunkt (5) in der Spannvorrichtung (6) befestigt zu werden, welche Verriegelungsmittel (21) dazu ausgebildet sind, beim Aktivieren des Stellglieds (9) zu brechen oder gelöst zu werden, während der Stellglied auch bewirkt, dass sich die Spannvorrichtung (6) an dem Ort des ersten Befestigungspunktes (5) in eine Richtung vom Fahrzeugteil (2, 2', 3 oder 3') weg bewegt, an welchem die Spannvorrichtung (6) durch die erste Befestigung (4) derart befestigt ist, dass der Stift (18) von mindestens einem des ersten Lochs (20) in dem ersten Fahrzeugteil (2, 2') und des ersten Lochs (21) in dem zweiten Fahrzeugteil (3, 3') zurückgezogen wird, um die erste Befestigung (4) zwischen dem ersten (2, 2') und dem zweiten (3, 3') Fahrzeugteil zu lösen.

11. Spannvorrichtung (6) für eine Sicherheitsauslösevorrichtung (1) für eine Fahrzeugsicherheitsvorrichtung, welche Spannvorrichtung (6) eine erste Seite (22) aufweist, welche dazu vorgesehen ist, auf das Fahrzeugteil (2, 2', 3 oder 3'), an welchem die Spannvorrichtung (6) durch die erste Befestigung (4) befestigt ist, gerichtet zu sein, welche Spannvorrichtung (6) ferner mit einem ersten Befestigungspunkt (5) und einem zweiten Befestigungspunkt (8) versehen ist, welche dazu ausgebildet sind, an einem Fahrzeugteil (2, 2', 3 oder 3') befestigt zu werden, wobei die Spannvorrichtung (6) ferner einen Stellglied (9) umfasst, welcher mit einem Kolben (14) versehen ist, welcher dazu ausgebildet ist, zwischen einer ersten Befestigungsart, in welcher der Kolben (14) nicht herrvorragt oder um eine Strecke a an der ersten Seite (22) der Spannvorrichtung (6) hervorragt, und einer zweiten Auslöseart, in welcher der Kolben (14) um eine Strecke b hervorragt, wobei die Strecke b länger als die Strecke a ist, an der ersten Seite (22) der Spannvorrichtung (6) zu wechseln.

12. Spannvorrichtung (6) nach Anspruch 11, **dadurch gekennzeichnet, dass** der erste (5) oder der zweite (8) Befestigungspunkt der Spannvorrichtung (6) durch eine Einbuchtung (23) in der Spannvorrichtung (6) gebildet ist.

13. Spannvorrichtung (6) nach Anspruch 11, **dadurch gekennzeichnet, dass** der Kolben (14) derart ausgebildet ist, dass er mit einem Teil der Spannvorrichtung (6) zusammenwirkt, so dass die Bewegung des Kolbens (15) beim Aktivieren auf eine begrenzte Strecke beschränkt wird.

14. Verfahren zum Montieren einer Sicherheitsauslösevorrichtung (1) in einem Fahrzeug (4), welches die folgenden Schritte umfasst:
a) Befestigen eines ersten Fahrzeugteils (2, 2') an einem zweiten Teil (3, 3') derart, dass eine erste Befestigung (4) zwischen einem ersten Befestigungspunkt (5') in dem ersten Fahrzeugteil (2) und einem ersten Befestigungspunkt (5") in dem zweiten Fahrzeugteil (3) gebildet wird,
b) Befestigen einer Spannvorrichtung (6) umfassend einen Stellglied (9) zum Lösen der ersten Befestigung (4) beim Aktivieren, wobei das Befestigen der Spannvorrichtung den Schritt des Befestigens der Spannvorrichtung (6) an der ersten Befestigung (4) an einem ersten Befestigungspunkt (5) und das Bilden einer zweiten Befestigung (7) zwischen einem zweiten Befestigungspunkt (8) der Spannvorrichtung (6) und einem zweiten Befestigungspunkt (5', 5") in einem der ersten oder zweiten Fahrzeugteile (2, 2', 3 oder 3') umfasst,
wobei der Schritt a vor dem Schritt b durchgeführt wird.

15. Verfahren nach Anspruch 14, wobei der Schritt a des Verfahrens ferner umfasst:
- Einsetzen eines mit einem Befestigungskopf (24) versehenen Verriegelungsstifts (18) in ein erstes Loch (19) in einem ersten Befestigungspunkt (5') in dem ersten Fahrzeugteil (2) und in ein erstes Loch (20) in einem ersten Befestigungspunkt (5") in dem zweiten Fahrzeugteil (3), um die erste Befestigung (4) zu bilden, und den Stift (18) mit Verriegelungsmitteln (21) zu versehen, welche dazu ausgestaltet sind, ein unerwünschtes Lösen der ersten Befestigung (4) unter normalen Bedingungen zu verhindern, und dazu ausgebildet sind, beim Aktivieren des Stellglieds (9) zu brechen oder gelöst zu werden, und der Schritt b ferner umfasst:
- Einpassen einer Einbuchtung (23) der Spannvorrichtung (6) in den Verriegelungsstift (18) durch Bewegen der Spannvorrichtung entlang dem Fahrzeugteil (2, 2', 3 oder 3'), an welchem die Spannvorrichtung (6) durch die erste Befestigung (4) befestigt werden soll, in eine Position, in welcher der Verriegelungsstift (18) und sein Befestigungskopf (24) eine Befestigung zwischen der Spannvorrichtung (6) und der ersten Befestigung (4) bilden, danach Befestigen der Spannvorrichtung (6), an einem zweiten Befestigungspunkt (8), an einem zweiten Befestigungspunkt (8) der Fahrzeugteile (2, 2', 3 oder 3').

## Revendications

1. Agencement à libération de sécurité (1) pour un véhicule comprenant une première partie de véhicule (2) et une deuxième partie de véhicule (3), ledit agencement à libération de sécurité (1) attachant la première partie (2) à la deuxième partie (3) par une première attache (4) à des premiers points d'attache (5', 5") de la respectivement première et deuxième partie (2, 3) dans un premier mode d'attache dans des conditions normales, et étant adapté pour libérer la première attache (4) dans un deuxième mode de libération dans une situation de collision,
**caractérisé en ce que**
ledit agencement à libération de sécurité (1) comprend un dispositif de serrage (6) pourvu d'un premier point d'attache (5) attaché à la première partie (2) ou à la deuxième partie (3) par ladite première attache (4) à l'un dudit premier point d'attache (5', 5") de la première ou deuxième partie (2, 3) et d'une deuxième attache (7) entre un deuxième point d'attache (8) du dispositif de serrage (6) et un deuxième point d'attache (8') de la première ou deuxième partie (2, 3), ledit dispositif de serrage (6) comprenant en outre un actionneur (9) adapté pour être activé dans le cas d'une situation de collision et pour provoquer la portion du dispositif de serrage (6) comprenant le premier point d'attache (5) à déplacer relativement ladite première partie (2) ou la deuxième partie (3) de manière à déconnecter la première attache (4) entre ladite première partie (2) et ledit deuxième partie (3) aux premiers points d'attache (5', 5") de ladite première partie (2) et ladite deuxième partie (3).

2. Agencement à libération de sécurité (1) selon la revendication 1,
**caractérisé en ce que**
ledit agencement à libération de sécurité fait partie d'un dispositif de charnière (10) pour relier un capot et un châssis d'un véhicule, ledit dispositif de charnière (10) comprenant un premier dispositif de support (2') correspondant à la première partie (2) du véhicule, étant attaché à une première plaque d'ancrage (3') correspondant à la deuxième partie (3) du véhicule, du capot ou du châssis du véhicule, ledit dispositif de charnière (10) comprenant en outre un deuxième dispositif de support (11) attaché à une deuxième plaque d'ancrage (12) de l'autre du capot (2) ou du châssis (3) du véhicule, ledit premier dispositif de support (2') et ledit deuxième dispositif de support (11) étant reliés de manière rotatoire l'un à l'autre par une liaison à pivotement (13).

3. Agencement à libération de sécurité (1) selon l'une quelconque des revendications précédentes, **caractérisé en ce que** ledit actionneur (9) comprend un piston (14) adapté pour, lorsqu'il est activé, se déplacer dans une direction vers une zone de support (15) de la partie de véhicule (2, 2', 3 ou 3') à laquelle le dispositif de serrage (6) est attaché par la première attache (4) si bien que la portion du dispositif de serrage (6) comprenant le premier point d'attache (5) s'éloigne de la partie de véhicule (2, 2', 3 ou 3') à laquelle elle est fixée en raison des forces venant du piston (14) travaillant sur la zone de support (15).

4. Agencement à libération de sécurité (1) selon l'une quelconque des revendications précédentes, **caractérisé en ce que** ledit actionneur (9) comprend un dispositif pyrotechnique (16) qui, lors de l'activation, provoque l'actionneur (9) à libérer l'attachement entre la première partie de véhicule (2, 2') et la deuxième partie de véhicule (3, 3').

5. Agencement à libération de sécurité (1) selon l'une quelconque des revendications précédentes, **caractérisé en ce que** ledit actionneur (9) est relié à une unité de commande (17) qui fait activer l'actionneur en réponse à un signal de commande indiquant une situation de collision.

6. Agencement à libération de sécurité (1) selon l'une quelconque des revendications précédentes, **caractérisé en ce que** ledit premier point d'attache (5) du dispositif de serrage (6) est permis de déplacer relativement la partie du véhicule (2, 2', 3 ou 3') à laquelle le dispositif de serrage (6) est attaché par la première attache (4) en raison de la flexion ou de la rupture du dispositif de serrage (6) tandis que la deuxième attache (7) entre la partie de véhicule (2, 2', 3 ou 3') et le dispositif de serrage (6) est toujours maintenue.

7. Agencement à libération de sécurité (1) selon la revendication 6, **caractérisé en ce que** ledit dispositif de serrage (6) est pourvu d'une section affaiblie (33) entre le premier point d'attache (5) et le deuxième point d'attache (8) si bien que la flexion ou la rupture du dispositif de serrage (6) entre le premier (5) et deuxième (8) point d'attache du dispositif de serrage (6) est facilitée.

8. Agencement à libération de sécurité (1) selon l'une quelconque des revendications 1 à 5, **caractérisé en ce que** ledit premier point d'attache (5) du dispositif de serrage (6) est permis de déplacer relativement la partie du véhicule (2, 2', 3 ou 3') à laquelle le dispositif de serrage (6) est attaché par la première attache (4) en raison d'un mouvement à pivotement du dispositif de serrage (6) au deuxième point d'attache (8') à la partie de véhicule (2, 2', 3 ou 3 ').

9. Agencement à libération de sécurité (1) selon la revendication 8, **caractérisé en ce que** ledit dispositif de serrage (6) est adapté pour faciliter un mouvement à pivotement au deuxième point de fixation (8').

10. Agencement à libération de sécurité (1) selon l'une quelconque des revendications précédentes, **caractérisé en ce que** ladite première attache (4) comprend une tige de verrouillage (18) insérée dans un premier trou (19) dans un premier point d'attache (5') dans la première partie de véhicule (2, 2') et un premier trou (20) dans un premier point d'attache (5") dans la deuxième partie de véhicule (3, 3'), ladite tige (18) étant pourvue de moyens de verrouillage (21) destinées à empêcher un détachement non désiré de la première attache (4) dans des conditions normales, ladite tige (18) étant pourvue d'une partie de tête d'attache (24) adaptée pour être attachée au premier point d'attache (5) dans le dispositif de serrage (6), lesdits moyens de verrouillage (21) étant adaptés pour se briser ou être libérés lors de l'activation dudit actionneur (9) tandis que ledit actionneur entraîne également le dispositif de serrage (6) à l'emplacement du premier point d'attache (5) à se déplacer dans une direction s'éloignant de la partie de véhicule (2, 2', 3 ou 3') à laquelle le dispositif de serrage (6) est attaché par la première attache (4) si bien que la tige (18) est retirée à partir d'au moins l'un du premier trou (20) dans la première partie du véhicule (2, 2') et du premier trou (21) dans la deuxième partie de véhicule (3, 3') de manière à libérer la première attache (4) entre la première (2, 2') et deuxième (3, 3') partie de véhicule.

11. Dispositif de serrage (6) pour un agencement à libération de sécurité (1) pour un dispositif de sécurité de véhicule, ledit dispositif de serrage (6) ayant un premier côté (22) destiné à faire face à la partie de véhicule (2, 2', 3 ou 3') à laquelle le dispositif de serrage (6) est attaché par la première attache (4), ledit dispositif de serrage (6) étant en outre pourvu d'un premier point d'attache (5) et un deuxième point d'attache (8) adaptés pour être attachés à une partie de véhicule (2, 2', 3 ou 3'), le dispositif de serrage (6) comprenant en outre un actionneur (9) pourvu d'un piston (14) adapté pour pouvoir basculer entre un premier mode d'attache dans lequel le piston (14) ne fait pas saillie ou fait saillie d'une distance a sur le premier côté (22) du dispositif de serrage (6) et un deuxième mode de détachement dans lequel le piston (14) est en saillie d'une distance b, la distance b étant plus longue que la distance a, sur le premier côté (22) du dispositif de serrage (6).

12. Dispositif de serrage (6) selon la revendication 11, **caractérisé en ce que** ledit premier (5) ou deuxième (8) point d'attache du dispositif de serrage (6) est réalisé par une échancrure (23) dans le dispositif de serrage (6).

13. Agencement de serrage (6) selon la revendication 11, **caractérisé en ce que** ledit piston (14) est construit de manière à interagir avec une portion du dispositif de serrage (6) si bien que le mouvement du piston (15), lorsqu'il est activé, est limité à une distance limitée.

14. Procédé pour le montage d'un agencement à libération de sécurité (1) dans un véhicule (4) comprenant les étapes consistant à:
a) attacher une première partie de véhicule (2, 2') à une deuxième partie (3, 3') si bien qu'une première attache (4) est faite entre un premier point d'attache (5') dans la première partie de véhicule (2) et un premier point d'attache (5") dans la deuxième partie de véhicule (3)
b) attacher un dispositif de serrage (6) comprenant un actionneur (9) pour libérer la première attache (4), lorsqu'il est activé, l'attachement du dispositif de serrage comprenant l'étape consistant à attacher ledit dispositif de serrage (6) à la première attache (4) à un premier point d'attache (5) et faire une deuxième attache (7) entre un deuxième point d'attache (8) du dispositif de serrage (6) et un deuxième point d'attache (5', 5") dans l'une de la première ou deuxième partie de véhicule (2, 2', 3 ou 3')
l'étape a étant effectuée avant l'étape b.

15. Procédé selon la revendication 14, dans lequel l'étape a du procédé en outre consiste à:
- insérer une tige de verrouillage (18), pourvue d'une tête d'attache (24), dans un premier trou (19) dans un premier point d'attache (5') dans la première partie de véhicule (2) et un premier trou (20) dans un premier point d'attache (5") dans la deuxième partie de véhicule (3) de manière à former la première attache (4) et fournissant ladite tige (18) de moyens de verrouillage (21) conçus pour empêcher le détachement non désiré de la première attache (4) dans des conditions normales et adaptés pour se briser ou être libérés lors de l'activation dudit actionneur (9), et ladite étape b en outre consistant à:
- adapter une échancrure (23) du dispositif de serrage (6) dans la tige de verrouillage (18) en déplaçant le dispositif de serrage le long de la partie de véhicule (2, 2', 3 ou 3') à laquelle le dispositif de serrage (6) est à attacher par la première attache (4) à une position dans laquelle la tige de verrouillage (18) et sa tête d'attache (24) forment une attache entre le dispositif de serrage (6) et la première attache (4), ensuite attacher le dispositif de serrage (6) situé à un deuxième point d'attache (8) à un deuxième point de fixation (8') desdites parties de véhicules (2, 2', 3 ou 3').
